# FASCICULE DE BREVET EUROPEEN

(11) **EP 3 061 117 B1**
(45) Date de publication et mention de la délivrance du brevet: **09.08.2017**
(21) Numéro de dépôt: 14789260.8
(22) Date de dépôt: 23.10.2014
(51) Int. Cl.: H01J 35/18, G01T 1/00

(54) **GÉNÉRATEUR DE RAYONS X À CAPTEUR DE FLUX INTÉGRÉ**
RÖNTGENSTRAHLGENERATOR MIT EINGEBAUTEM DURCHFLUSSSENSOR
X-RAY GENERATOR WITH A BUILT-IN FLOW SENSOR

(30) Priorité: 25.10.2013 FR 1302470
(43) Date de publication de la demande: 31.08.2016
(73) Titulaire: THALES, 92400 Courbevoie (FR); Commissariat à l'Énergie Atomique et aux Énergies Alternatives, 75015 Paris (FR)
(72) Inventeur: MAZELLIER, Jean-Paul, F-91767 Palaiseau Cedex (FR); DELFAURE, Colin, F-91191 Gif-sur-Yvette Cedex (FR); PONARD, Pascal, F-74202 Thonon-les-Bains (FR); SAADA, Samuel, F-92340 Bourg la Reine (FR); TRANCHANT, Nicolas, F-91170 Gif-sur-Yvette (FR)
(74) Mandataire: Collet, Alain
(86) Numéro de dépôt international: PCT/EP2014/072795
(87) Numéro de publication internationale: WO 2015/059250

(56) Documents cités:
- WO-A2-2004/026007
- US-A- 5 717 214
- US-B1- 6 850 598

## Description

L'invention se situe dans le domaine des tubes à rayons X et concerne l'intégration d'un capteur de flux de rayons X dans le tube.

Un générateur de rayons X comprend principalement une enceinte à vide comportant à une de ses extrémités une cathode et à l'autre extrémité une anode. Un faisceau d'électrons issu de la cathode est accéléré dans l'enceinte à vide sous l'action d'un champ électrique. Le champ accélérateur peut être créé soit par une onde électromagnétique RF, soit par un champ statique créé entre deux électrodes portées à très hautes tensions électriques (typiquement de 10 kVolts à 500 kVolts). Le faisceau électronique fortement accéléré vient impacter une cible généralement constituée d'un matériau réfractaire à fort numéro atomique ou bien présentant des raies caractéristiques de fluorescence. L'interaction entre les électrons énergétiques et la cible permet l'émission d'un rayonnement électromagnétique dans le domaine des X principalement par effet Bremsstrahlung et par fluorescence X. Seulement quelques pourcents de l'énergie des électrons sont utilisés pour produire les rayons X. Le reste de l'énergie, soit environ 96 à 99%, est dissipé sous forme de chaleur principalement dans la cible. Sous le flux électronique, la température de la cible peut approcher le point de fusion, la cible étant généralement réalisée en tungstène (3400°C). La chaleur produite doit être évacuée efficacement car ce phénomène est l'un des principaux facteurs limitant la brillance des sources de rayons X. Le rayonnement X se propage alors hors de l'enceinte à vide en passant par une fenêtre qui est transparente aux rayons X et disposée sur le trajet du faisceau de rayons X.

Il existe deux familles de tubes, les tubes fonctionnant en réflexion et ceux fonctionnant en transmission. Dans un tube en réflexion, la cible est présente à l'intérieur du tube. Le flux de rayons X se propage vers l'extérieur en passant par une fenêtre quasi transparente aux rayons X (par exemple en béryllium) réalisée dans l'enceinte du tube. La cible et la fenêtre de transmission sont séparées. Dans les tubes fonctionnant en transmission, la cible, dans ce cas constituée d'un film mince, est juxtaposée à la fenêtre transparente. La fenêtre dite de transmission joue alors un rôle important dans l'évacuation de la chaleur générée au niveau de la cible. En plus d'une haute transparence aux rayons X, la fenêtre de transmission doit présenter une conductivité thermique maximale.

Indépendamment du positionnement de la fenêtre de transmission, le flux de rayons X peut varier dans le temps, en intensité et en énergie afin d'ajuster les paramètres d'imagerie tels que le contraste, le pouvoir pénétrant ou la résolution spatiale. La variation du flux de rayons X est dans ce cas volontaire. En effet, un opérateur peut modifier le courant et/ou la tension d'accélération du faisceau d'électrons. La variation du flux de rayons X peut aussi être involontaire, notamment suite à une fluctuation de l'alimentation haute tension ou de la source électronique. Afin d'utiliser le tube générateur de rayons X de manière optimale, une mesure directe du flux de rayons X est nécessaire. En radiothérapie par exemple, cela permet de connaître en temps réel le débit de dose de rayonnement délivré par le tube.

Actuellement, les fenêtres de transmission sont principalement en béryllium. Le béryllium est un métal possédant une bonne transparence aux rayons X et une conductivité thermique de l'ordre de 200 W/(m.K) à température ambiante qui lui permet de dissiper la chaleur dégagée par le tube à rayons X en fonctionnement. Par contre, le béryllium est un matériau extrêmement cancérigène capable de provoquer des maladies graves s'il est inhalé. On peut citer par exemple la bérylliose. Par ailleurs, le béryllium étant un métal, il ne peut pas être utilisé en détection de flux de rayons X.

Avec une conductivité thermique comprise entre plusieurs centaines de W/(m/K) pour du diamant polycristallin de synthèse et 2000 W/(m.K) pour du diamant monocristallin, le diamant possède une conductivité thermique jusqu'à dix fois supérieure à celle du béryllium et conduit efficacement la chaleur. Le diamant de numéro atomique Z=6 présente une transparence aux rayons X voisine de celle du béryllium (Z=4) et il peut être mis en oeuvre sous forme de membrane étanche à l'ultra vide. Le diamant monocristallin possède une excellente conductivité thermique ainsi que des propriétés de détection de rayons X très bonnes. Par contre, il n'est pas possible de le synthétiser sur une surface supérieure à quelques millimètres carrés. Le diamant polycristallin peut facilement être synthétisé sur des surfaces plus grandes. Et il possède une conductivité thermique de 500 à 1500 W/m.K. La conductivité thermique du diamant polycristallin dépend de plusieurs facteurs. On peut citer par exemple la densité de joints de grain et la taille des grains de la structure cristalline du diamant. Par ailleurs, le diamant polycristallin possède des propriétés de détection de rayons X qui dépendent aussi de la qualité et de la structure cristalline du diamant.

Depuis peu, il existe des générateurs de rayons X comportant des fenêtres de transmission en diamant polycristallin. Le remplacement des fenêtres de transmission en béryllium par des fenêtres de transmission en diamant permet de travailler avec des densités de puissance supérieures. En effet, la haute conductivité thermique du diamant permet de mieux dissiper la chaleur produite par le spot électronique frappant la fenêtre à transmission. Une meilleure dissipation de la chaleur est particulièrement intéressante pour les tubes à rayons X qui fonctionnent en transmission, c'est-à-dire avec une juxtaposition de la fonction cible et de la fonction fenêtre dans une même structure. Dans l'état de l'art, seule la haute conductivité thermique du diamant est exploitée afin d'atteindre des puissances supérieures à celles des tubes traditionnels.

Actuellement, la mesure du flux réel de rayons X est faite indirectement en associant par calibration la dose de rayons X à la mesure de la tension d'accélération du faisceau électronique et du courant du tube radiogène. Mais des courants de fuite au niveau du générateur de rayons X, des microclaquages ou bien les phénomènes d'absorption et de filtration en énergie de la structure du tube, sont des sources d'erreur car ils sont intégrés pour la détermination du flux alors qu'ils ne génèrent pas de flux de rayons X utile.

Pour pallier à cette difficulté, la détection d'un flux de rayons X émis par un tube générateur de rayons X peut se faire à l'aide d'un capteur, aussi appelé dosimètre. Le capteur de flux mesure le flux de rayons X incident. Le capteur de flux est placé de quelques centimètres à quelques mètres du tube dans la direction suivie par le faisceau de rayons X.

L'invention vise à intégrer au tube une fenêtre fonctionnalisée en réalisant un capteur de flux de rayons X dans une fenêtre à transmission à base de diamant.

A cet effet, l'invention a pour objet un tube générateur de rayons X comprenant une enceinte à vide avec une cathode et une anode placées dans l'enceinte à vide, la cathode émettant un faisceau électronique en direction de l'anode, l'anode comportant une cible émettant un rayonnement X lorsqu'elle est impactée par le faisceau électronique. Le rayonnement X se propageant hors de l'enceinte à vide en traversant la paroi de l'enceinte par une fenêtre de transmission en diamant, caractérisée en ce qu'un capteur de rayons X à base de diamant est intégré sur la fenêtre de transmission en diamant.

Pour la réalisation d'un capteur de flux de rayons X en ligne, le diamant peut être utilisé en tant que couche active car il possède des propriétés semiconductrices. A la différence d'un détecteur déporté dans lequel la couche active doit absorber la quasi-totalité du flux incident de rayons X, un capteur de flux de rayons X intégré ne doit absorber qu'une petite fraction du flux de rayons X pour ne pas perturber l'utilisation du tube et délivrer une information proportionnelle au flux de photons. De cette manière, on réalise une mesure continue et en ligne du flux de rayons X sans perturber le flux utile du tube. Le diamant peut être utilisé pour l'intégration d'un capteur de flux de rayons X en ligne car il présente une très bonne transparence aux rayons X. L'ajout d'un détecteur de flux déporté à base de diamant peut être avantageux pour mesurer le flux de rayons X réellement produit en ligne. Cette combinaison nécessite toutefois d'utiliser deux substrats diamant indépendants. La co-intégration d'un détecteur de flux dans une fenêtre de transmission à base de diamant permettra de réduire l'utilisation de matériau et d'augmenter le niveau d'intégration.

WO 2004/026007 A2 divulgue un tube générateur de rayons X selon le préambule de la revendication 1.
US 5 717 214 A divulgue un capteur de rayons X à base de diamant, pour mesurer le centrage du faisceau de rayons X, qui peut avoir une fenêtre de transmission. L'invention sera mieux comprise et d'autres avantages apparaîtront à la lecture de la description détaillée d'un mode de réalisation donné à titre d'exemple, description illustrée par le dessin joint dans lequel :
- les figures 1a et 1b représentent schématiquement un tube à rayons X en réflexion et un tube à rayons X en transmission respectivement ;
- la figure 2 illustre une fenêtre de transmission à base de diamant d'un tube fonctionnant en transmission avec la fonction d'évacuation de la chaleur et la fonction de capteur de rayons X ;
- la figure 3 représente une variante du capteur de rayons X avec un anneau de garde ;
- la figure 4 représente une variante du capteur de rayons X avec un détecteur surfacique de courant ;
- la figure 5 représente une variante de la fenêtre de transmission pour les tubes multifocaux/multisources où plusieurs capteurs de rayons X sont intégrés à la fenêtre et placés en regard de plusieurs sources électroniques ;
- la figure 6 représente une variante de la fenêtre de transmission où plusieurs cibles sont juxtaposées à la fenêtre;
- la figure 7 représente une variante de fenêtre de transmission en diamant,
- la figure 8 représente un tube générateur de rayons X comprenant un asservissement.

Par souci de clarté, les mêmes éléments porteront les mêmes repères dans les différentes figures.

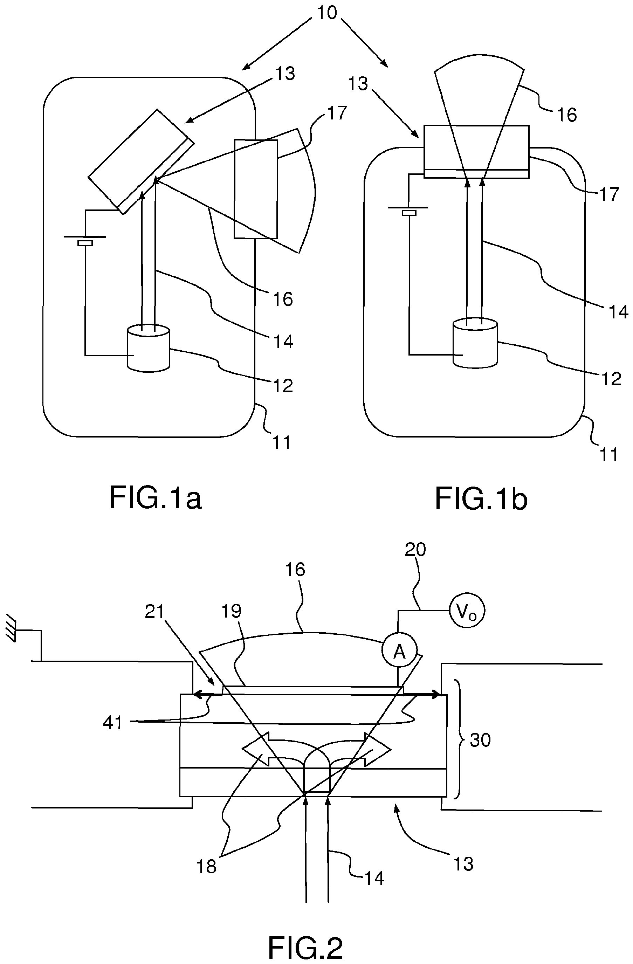

De manière générale et comme représenté schématiquement sur les figures 1a et 1b, un tube générateur de rayons X 10 comprend une enceinte à vide 11 avec une cathode 12 et une anode 13 placées dans l'enceinte à vide 11. La cathode 12 émet un faisceau électronique 14 en direction de l'anode 13 qui se comporte comme une cible émettant un rayonnement X 16 lorsqu'elle est soumise au faisceau électronique 14. Autrement dit, la cible est l'anode 13. Le rayonnement X 16 se propage hors de l'enceinte à vide 11 en traversant la paroi de l'enceinte 11 par une fenêtre transparente 17. La fenêtre 17 doit présenter une haute transparence aux rayons X. Sur la figure 1a, la cible 13 est distante de la fenêtre de transmission 17. On dit que le tube générateur à rayons X 10 a une structure en réflexion. Sur la figure 1b, la cible 13 est juxtaposée à la fenêtre de transmission 17. On dit que le tube générateur à rayons X 10 a une structure en transmission. Lors de l'impact du faisceau électronique 16 sur la cible 13, une grande partie de l'énergie issue du faisceau électronique 16 est dissipée sous forme de chaleur dans la cible 13. La chaleur doit être évacuée efficacement pour éviter toute détérioration du tube générateur de rayons X 10. Pour une structure en transmission, la cible 13 étant juxtaposée à la fenêtre de transmission 17, la fenêtre de transmission 17 joue un rôle important dans l'évacuation de la chaleur générée au niveau de la cible 13. En plus d'une haute transparence aux rayons X, la fenêtre de transmission 17 doit présenter une très bonne conductivité thermique.

La figure 2 illustre la fenêtre de transmission 30 fonctionnalisée à base de diamant avec une fonction d'évacuation de la chaleur (représentée par la flèche 18) et une fonction de capteur de rayons X 16. Un dépôt de tungstène ou d'un autre métal pouvant constituer la cible 13 est réalisé sur la fenêtre en diamant 30. L'épaisseur de diamant doit pouvoir permettre à la fenêtre de supporter la différence de pression entre le vide de l'enceinte à vide 11 et la pression extérieure d'environ 1 bar (1bar = 100kPa). Par exemple, pour une fenêtre en diamant possedant un module de Young de 1000GPa et un diamètre de 8 mm, une épaisseur de 100 µm convient pour résister à une différence de pression de 1 bar. Ainsi, en plus des fonctions thermiques et de détection, la fenêtre de transmission a également une fonction mécanique.

La fenêtre de transmission 30 comprend une couche supplémentaire de diamant. La couche supplémentaire assure le rôle de capteur 21 de rayons X. Il est bien entendu que le capteur 21 peut être mis en oeuvre aussi bien pour une cible fonctionnant en réflexion comme représenté sur la figure 1a que pour une cible fonctionnant en transmission comme représenté sur la figure 1b. Le corps du diamant constituant le capteur 21 est non dopé, c'est-à-dire qu'il dispose de propriétés intrinsèques de semi-conduction.

Une électrode 19 est réalisée au niveau du capteur 21 sur la fenêtre de transmission 30. L'électrode 19 peut par exemple être composée de couches métalliques. L'électrode 19 peut aussi être composée de couches de diamant dopé. Autrement dit, l'électrode 19 est un semiconducteur ou un métal. La fenêtre 30 est brasée ou collée au tube générateur de rayons X 10 pour y être intégrée.

En fonctionnement, un faisceau électronique 14 impacte la cible 13 et génère un flux de rayons X 16 et de la chaleur. La chaleur est conduite vers le corps du tube générateur de rayons X 10 par conduction thermique à travers la fenêtre de transmission en diamant 30. La conductivité thermique du matériau de la fenêtre 30 joue un rôle fondamental pour l'évacuation de la chaleur.

Une tension 20 est appliquée sur l'électrode 19 du capteur 21. Le courant généré par le flux de rayons X 16 dans le diamant intrinsèque du capteur 21 est collecté par les électrodes 19. Le courant électrique est proportionnel au flux émis. Une table de calibration (non représentée sur la figure) permet de connaître en temps réel le flux de rayons X 16 généré par le tube générateur de rayons X 10.

Comme détaillé précedemment, le diamant possède un faible taux d'absorption du flux de rayons X et peut permettre une mesure en ligne du flux. Ce faible taux d'absorption du flux de rayons X entraîne une plus faible réponse (un plus faible courant) à une dose de rayons X comparé à d'autres matériaux semi-conducteurs comme le silicium. Par ailleurs, un diamant de bonne qualité cristallographique présente un faible niveau de bruit. Ainsi, le rapport signal sur bruit est favorable et permet une mesure précise du flux de rayons X tout en assurant une perte minimale du flux utile.

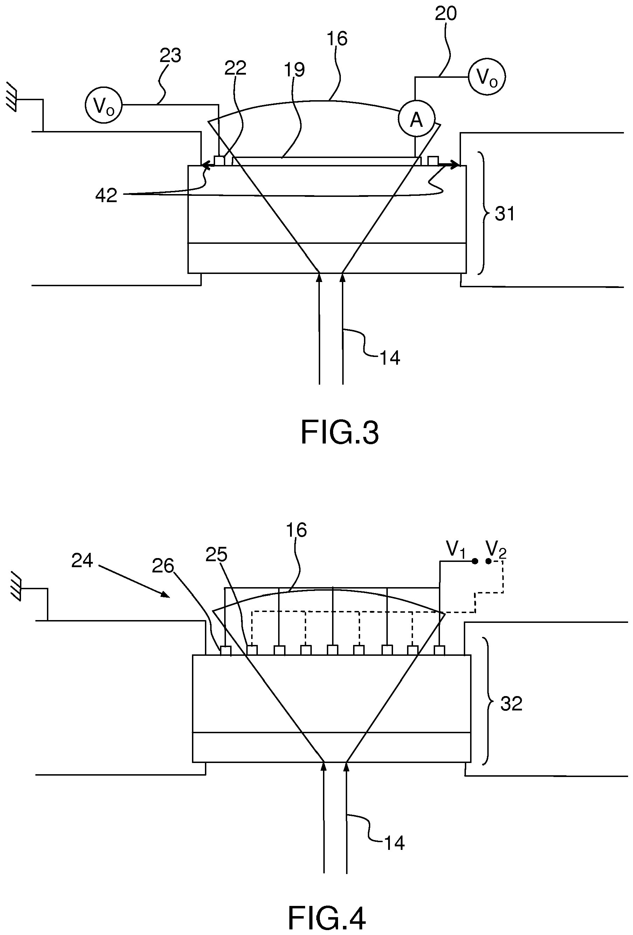

La figure 3 représente la fenêtre de transmission 31 fonctionnalisée à base de diamant avec une variante du capteur de rayons X avec un anneau de garde conducteur 22 entourant le capteur et relié à une source de tension électrique. L'anneau de garde conducteur 22 est de forme rectangulaire, mais peut prendre toute autre forme de polygone. L'anneau de garde conducteur 22 est un anneau qui entoure l'électrode 19.

Sans anneau de garde conducteur 22, on polarise l'électrode 19 à V0 tandis que le tube générateur 10 est à la masse. En l'absence de flux de rayons X, il peut exister un courant en surface du diamant qui transite de l'électrode 19 au corps du tube 10 à cause d'une différence de potentiel en surface du diamant. C'est ce qu'on appelle un courant de fuite. Sur la figure 2, il est représenté par les flèches 41. Afin de limiter l'effet indésirable de la différence de potentiel, on polarise l'électrode 19 au potentiel V0 et on place un anneau de garde conducteur 22 que l'on polarise également à V0. Il n'y a donc pas de différence de potentiel en surface du diamant entre l'électrode 19 et l'anneau 22 et donc pas de courant parasite entre l'électrode 19 et l'anneau 22. En revanche, un courant parasite peut encore être présent entre l'électrode 19 et le corps du tube 10. C'est pourquoi on polarise indépendamment l'électrode 19 et l'anneau de garde conducteur 22. On mesure le courant de l'électrode 19 et grâce à la présence de l'anneau de garde conducteur 22, les courants de surface, aussi appelés courants de fuite, 42 n'existent plus qu'entre l'anneau de garde conducteur 22 et le corps du tube 10 et par conséquent, ils n'affectent pas le courant mesuré.

La figure 4 représente la fenêtre de transmission 32 fonctionnalisée à base de diamant avec une variante du capteur 21 de rayons X 16 avec un détecteur surfacique 24 de courant. Deux électrodes 25 et 26 sont réalisées au niveau du capteur 21 sur la fenêtre de transmission 17. De même que pour l'électrode 19, les électrodes 25 et 26 peuvent être composées de couches métalliques ou de couches de diamant dopé. Les électrodes 25 et 26 sont classiquement disposées selon une géométrie imbriquée. On supposera que les courants surfaciques évoqués dans la configuration avec un anneau de garde conducteur sont négligeables par rapport au courant à mesurer dans le diamant. Les électrodes 25 et 26 permettent de mesurer un courant généré dans une zone proche de la surface du capteur 21 et d'éliminer les courants parasites non désirés.

De manière générale, pour collecter un courant, un champ électrique séparateur est appliqué. Par exemple, l'application d'une différence de potentiel entre deux électrodes engendre un champ électrique qui dirige des charges photogénérées dans le diamant. Les deux électrodes permettent de récupérer le courant résultant pour effectuer la mesure de flux de rayons X. Les deux électrodes 25 et 26 appliquent le champ mais en surface du capteur. Ainsi, la distance inter-électrode est faible, de l'ordre de quelques micromètres. Les tensions à appliquer sont moins importantes et le parcours des charges photogénérées est minimisé. Les charges sont donc mieux collectées. Par ailleurs, le volume de collection est plus petit donc la quantité de charges collectées est plus faible mais la température de surface du capteur 21 est aussi plus faible que dans le volume et le bruit thermique est donc fortement réduit. Le rapport signal sur bruit est donc favorable.

Il est possible que le flux de rayons X ne soit pas homogène, soit de manière involontaire, soit de manière contrôlée en structurant à l'origine le faisceau électronique 14. Il est donc souhaitable de pouvoir mesurer spatialement une distribution de flux de rayons X. La structuration du flux de rayons X permet la reconstruction d'image pour l'analyse de rayons X. La structuration de la cible permet des applications telles que la tomographie.

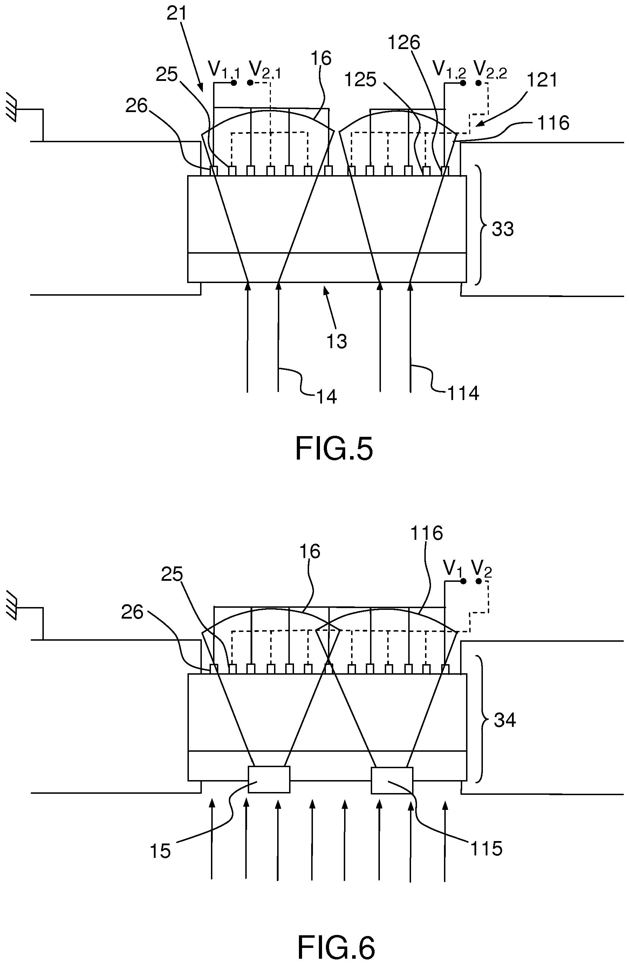

La figure 5 représente une variante de la fenêtre de transmission 33 fonctionnalisée à base de diamant où plusieurs capteurs de rayons X sont intégrés sur la fenêtre 33. Sur la figure 5, deux capteurs 21 et 121 sont représentés. Il est également possible de réaliser une fenêtre dans laquelle plus de deux capteurs sont intégrés. Deux faisceaux électroniques 14 et 114 impactent la cible 13. La cible 13 émet deux flux de rayons X 16 et 116. Deux jeux d'électrodes surfaciques 25, 26 et 125, 126 sont réalisés au niveau de la fenêtre de transmission 33. On dit que le capteur est matricé. En fait, plusieurs capteurs sont intégrés à la fenêtre de transmission 33. La présence de plusieurs capteurs permet une résolution spatiale et temporelle en présence de plusieurs faisceaux électroniques ou d'un seul faisceau électronique non-homogène.

La figure 6 représente une variante de la fenêtre de transmission 34 fonctionnalisée à base de diamant où deux cibles 15 et 115 sont intégrées. L'exemple montre deux cibles, mais il est tout à fait possible d'en avoir plusieurs autres. Un faisceau électronique par cible ou un faisceau électronique unique réparti sur toutes les cibles impacte les cibles 15 et 115. Les deux cibles 15 et 115 émettent chacune un flux de rayons X, respectivement 16 et 116. Un jeu d'électrodes 25, 26 mesure le courant généré. On dit que la cible est discrétisée ou structurée afin de structurer le flux de rayons X.

Le tube générateur de rayons X tel que décrit dans l'invention permet ainsi d'obtenir une mesure directe, en ligne d'un flux de rayons X. De plus, il est possible d'obtenir des informations sur la distribution spatiale du flux.

Actuellement, les fenêtres de transmission sont principalement en béryllium. Le béryllium est un métal avec une bonne transparence aux rayons X et possède une conductivité thermique de 200 W/m.K. Peu à peu, des fenêtres de transmission en diamant apparaissent. La fenêtre de transmission telle qu'utilisée dans l'invention peut être soit en diamant monocristallin dans le cas d'une fenêtre de petite taille, soit en diamant polycristallin. Enfin, la fenêtre de transmission du tube générateur de rayons X selon l'invention peut être en diamant polycristallin avec au moins une inclusion de diamant monocristallin. Cela permet d'améliorer la mesure du flux de rayons X tout en conservant une surface importante de la fenêtre.

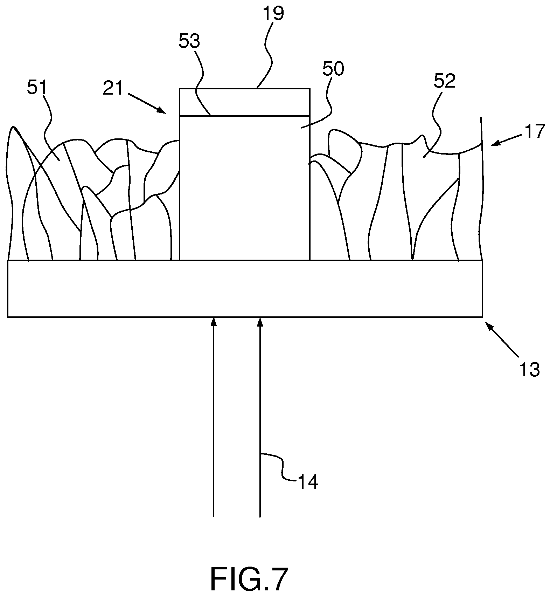

La figure 7 représente une fenêtre de transmission en diamant monocristallin et polycristallin. La fenêtre de transmission en diamant monocristallin et polycristallin est obtenue en posant un diamant monocristallin 50 sur un support qui permet la croissance d'un film de diamant (silicium, molybdène, etc.). Un masque est déposé sur une surface 53 parallèle au support du diamant monocristallin et opposée au support. On synthétise du diamant polycristallin 51, 52 autour du diamant monocristallin. Le diamant polycristallin croit latéralement et verticalement. Après la croissance du diamant polycristallin, le masque sur le diamant monocristallin est retiré et le film de diamant est libéré de son support et on obtient une fenêtre de transmission en diamant polycristallin avec une inclusion de diamant monocristallin. La fenêtre de transmission peut avoir plusieurs inclusions de diamant monocristallin. Chaque inclusion de diamant monocristallin a habituellement une section carrée mais peut prendre toute autre forme.

La fenêtre de transmission en diamant monocristallin et polycristallin combine les excellentes propriétés de conductivité thermique et de détection de rayons X du diamant monocristallin sur une petite surface et les bonnes propriétés thermique et mécanique du diamant polycristallin sur une grande surface. Idéalement, la fenêtre de transmission est conçue et positionnée de manière à ce que la ou les inclusions de diamant monocristallin 50 soient dans l'axe du ou des faisceaux électroniques 14. La chaleur générée s'étale efficacement dans la direction radiale sur les quelques millimètres de l'inclusion de diamant monocristallin. La chaleur est ensuite évacuée par le diamant polycristallin. L'épaisseur de diamant polycristallin dans une fenêtre à transmission en diamant polycristallin avec des inclusions de diamant monocristallin pour dissiper une quantité donnée de chaleur est réduite par rapport à une fenêtre de transmission uniquement en diamant polycristallin. La fenêtre de transmission en diamant polycristallin avec des inclusions de diamant monocristallin est robuste mécaniquement et transparente aux rayons X. Les inclusions de diamant monocristallin de la fenêtre peuvent être utilisées pour la réalisation d'un capteur de flux à rayons X 21. Une électrode 19 est alors réalisée au niveau du capteur 21. Ainsi, la fenêtre de transmission permet de dissiper la chaleur efficacement, de résister aux conditions mécaniques imposées par la différence de pression entre l'intérieur et l'extérieur de l'enceinte et de détecter en temps réel le flux de rayons X émis par le tube générateur de rayons X.

Ainsi, sous l'effet d'un champ électrique, la cathode 12 d'un tube générateur de rayons X 10 émet un faisceau électronique 14 dont les électrons sont accélérés dans l'enceinte à vide 11 du tube générateur 10 grâce à une onde électromagnétique RF ou un champ statique créé entre l'anode 13 et la cathode 12. De manière générale, il existe plusieurs types de cathode qui génèrent des électrons sous l'effet d'un champ. Parmi elles, les cathodes froides à base de nanotubes de carbone sont des émetteurs à effet de champ qui présentent un certain nombre de potentiels comme l'émission d'électrons à haute fréquence et la commutation à l'aide d'un signal optique. Une cathode froide est capable de piloter un faisceau électronique pour faire du photo-contrôle. D'autre part, comme expliqué précédemment, le générateur de rayons X 10 à capteur de flux intégré permet de mesurer en direct la dose émise par le tube 10 sans en perturber l'utilisation.

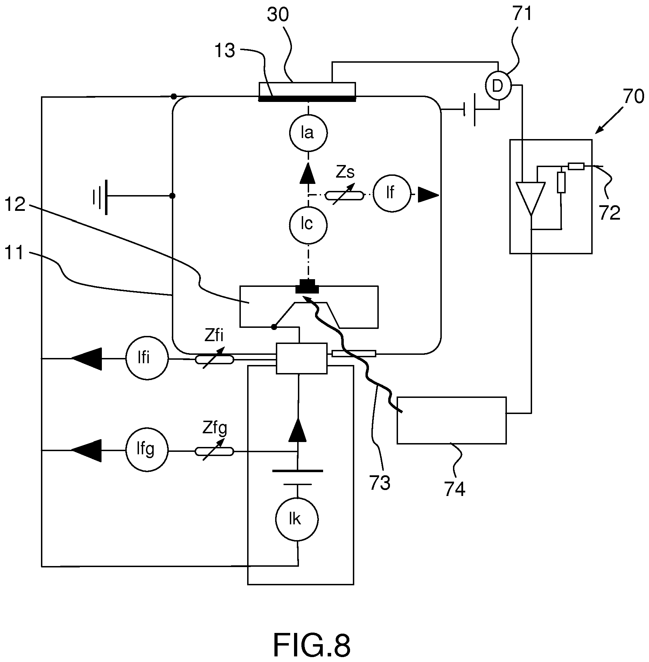

La figure 8 représente un tube générateur de rayons X comprenant un asservissement 70. Les éléments représentés communs aux éléments de la figure 2 sont identiques. Sur la figure 8, la fenêtre de transmission fonctionnalisée est référencée 30. Il est à noter qu'il peut tout aussi bien s'agir de la fenêtre de transmission 31, 32, 33 ou 34 des figures 3 à 6. De même, la fenêtre de transmission peut être en diamant polycristallin ou monocristallin, ou en diamant polycristallin avec au moins une inclusion de diamant monocristallin, auquel cas le capteur de rayons X peut être intégré sur la fenêtre de transmission en diamant au niveau d'une inclusion de diamant monocristallin.

Actuellement, il existe des dispositifs de contrôle et d'asservissement d'un flux de rayons X. Ce contrôle est généralement réalisé soit par un détecteur externe à la source de photons, soit par la mesure du courant haute tension délivré par le générateur à la source de rayons X. Ces deux dispositifs présentent des limitations pour un contrôle précis et en temps réel de la dose de rayons X.

Dans le cas d'un détecteur externe à une distance d, le flux du rayonnement ionisant varie avec le carré de la distance d et le positionnement spatial du détecteur. Il faut donc connaître et étalonner précisément ce dispositif. Compte tenu des dérives de l'ensemble du système formé par le générateur, la source de rayons X, la géométrie du système d'imagerie et du détecteur, ces étalonnages doivent être fréquents notamment, par exemple, pour des applications en imagerie médicale ou de laminographie.

Une autre limitation des dispositifs actuels au bon contrôle du flux de rayons X apparaît dans le cas où l'objet ou le patient est situé entre la source et le détecteur. Dans cette configuration, il y a une modification du spectre de rayonnement liée à l'interaction du milieu traversé. Le spectre en énergie de la source va être modifié à la sortie de l'objet en un spectre variable en fonction de l'objet. La réponse du détecteur de contrôle n'étant pas linéaire en fonction de l'énergie des photons, cette modification spectrale va introduire une difficulté pour la calibration du système et l'asservissement de la dose.

Au niveau des générateurs de rayons X actuels, il existe également des limitations à l'asservissement de la dose par le courant haute tension délivré par le générateur à la source de rayons X. En effet, le courant reçu par l'anode et produisant le rayonnement ionisant n'est pas rigoureusement proportionnel au courant imposé par le générateur. Des courants de fuites variables peuvent apparaître soit au niveau du multiplicateur de tension dans le générateur, soit dans les connecteurs haute tension et enfin à l'intérieur de la source de rayons X.

De plus, des courants parasites peuvent affecter la précision d'un asservissement par le courant Ik du générateur. Un courant de fuite Ifg peut exister au niveau du multiplicateur de tension qui est difficile à mesurer sur les composants électroniques portés à la haute tension (20 à 500 kV). Il peut exister un courant de fuite Ifi au niveau du connecteur haute tension tube/générateur. Enfin il peut exister un courant de fuite If à l'intérieur de la source de rayons X. Le courant de fuite If à l'intérieur de la source de rayons X peut être fluctuant et variable dans le temps, il est difficile à mesurer en temps réel. Ce courant représente une fraction du courant électronique produit par la cathode mais intercepté avant d'atteindre l'anode ajouté au courant émis par effet de champ au niveau des électrodes cathodiques constituant le tube générateur de rayons X et le courant correspondant aux électrons secondaires rétrodiffusés au niveau de l'anode par collision élastique ou réémission secondaire vraie.

Le tube générateur de rayons X 10 comprend un asservissement du faisceau électronique 14 de la cathode 12 en fonction d'une mesure 71 d'un flux de rayons X émis par le tube générateur 10. Avantageusement, la cathode 12 est une photocathode à nanotube de carbone.

Ainsi, le tube générateur de rayons X 10 comprend un asservissement 70 direct entre le courant reçu par l'anode 13 produisant le rayonnement ionisant et l'élément produisant ce courant d'anode. Ce dispositif nécessite un capteur de flux intégré et avantageusement une photocathode à nanotube de carbone ou un autre type d'émetteur d'électrons, plus conventionnel, dont on peut moduler le courant. Ces deux fonctions sont intégrées au sein de la même source de rayons X.

Le capteur de flux intégré à l'anode 13 fournit un signal proportionnel à la dose réelle générée par la source de rayons X. La mesure 71 délivrée par le capteur de flux permet un contrôle direct du courant de cathode afin de maintenir, pas le biais d'une consigne 72, le courant d'anode à une valeur précise quelles que soient les variations du courant de fuite.

L'asservissement du courant émis par le signal du capteur de flux permet de générer une dose de rayons X très stable quels que soient les courants parasites ou de fuite du système formé par le générateur, les connecteurs haute tension et la source radiogène. Toute modulation du courant d'émission est mesurée par le capteur du générateur et la boucle d'asservissement 70 corrigera le signal de commande de la cathode 12 en conséquence. Ce mode de fonctionnement est particulièrement intéressant pour l'utilisation de cathodes à base de nanotubes de carbone car il permet de stabiliser la dose délivrée lorsque l'émission est pulsée à haute fréquence ou lorsque la cathode est photo-contrôlée par un signal optique 73 par le biais d'un contrôleur optique 74.

## Revendications

1. Tube générateur de rayons X (10) comprenant une enceinte à vide (11) avec une cathode (12) et une anode (13) placées dans l'enceinte à vide (11), la cathode (12) émettant un faisceau électronique (14) en direction de l'anode (13), l'anode (13) comportant une cible (13) émettant un rayonnement X (16) lorsqu'elle est impactée par le faisceau électronique (14), le rayonnement X (16) se propageant hors de l'enceinte à vide (11) en traversant la paroi de l'enceinte (11) par une fenêtre de transmission (17 ; 30 ; 31 ; 32 ; 33 ; 34) à base de diamant, **caractérisée en ce qu'**un capteur de rayons X (21 ; 121) à base de diamant est intégré sur la fenêtre de transmission (17) à base de diamant.

2. Tube générateur de rayons X (10) selon la revendication 1, **caractérisé en ce que** la cible (13) est distante de la fenêtre de transmission (17 ; 30 ; 31 ; 32 ; 33 ; 34).

3. Tube générateur de rayons X (10) selon la revendication 1, **caractérisé en ce que** la cible (13) est juxtaposée à la fenêtre de transmission (17; 30 ; 31 ; 32 ; 33 ; 34).

4. Tube générateur de rayons X (10) selon l'une des revendications précédentes, **caractérisé en ce que** le capteur de rayons X (21) comprend au moins une électrode (19) composée de couches conductrices.

5. Tube générateur de rayons X (10) selon l'une des revendications 1 à 3, **caractérisé en ce que** le capteur de rayons X (21) comprend au moins une électrode (19) composée de couches de diamant dopées.

6. Tube générateur de rayons X (10) selon l'une des revendications précédentes, **caractérisé en ce que** le capteur de rayons X (21) comporte un détecteur surfacique de courant (24).

7. Tube générateur de rayons X (10) selon l'une des revendications 1 à 6, **caractérisé en ce que** plusieurs capteurs (21 ; 121) sont intégrés sur la fenêtre de transmission (33).

8. Tube générateur de rayons X (10) selon l'une des revendications précédentes, **caractérisé en ce que** plusieurs cibles (15 ; 115) sont juxtaposées à la fenêtre de transmission (34).

9. Tube générateur de rayons X (10) selon l'une des revendications précédentes, **caractérisé en ce que** le capteur de rayons X (21) comporte un anneau de garde conducteur (22) entourant le capteur et relié à une source de tension électrique.

10. Tube générateur de rayons X (10) selon l'une des revendications 1 à 9, **caractérisé en ce que** la fenêtre de transmission (17; 30 ; 31 ; 32 ; 33 ; 34) est en diamant polycristallin.

11. Tube générateur de rayons X (10) selon l'une des revendications 1 à 9, **caractérisé en ce que** la fenêtre de transmission (17; 30 ; 31 ; 32 ; 33 ; 34) est en diamant monocristallin.

12. Tube générateur de rayons X (10) selon l'une des revendications 1 à 9, **caractérisé en ce que** la fenêtre de transmission (17; 30 ; 31 ; 32 ; 33 ; 34) est en diamant polycristallin avec au moins une inclusion de diamant monocristallin (50).

13. Tube générateur de rayons X (10) selon l'une des revendications précédentes, **caractérisé en ce que** le capteur de rayons X (19) est intégré sur la fenêtre de transmission (17; 30 ; 31 ; 32 ; 33 ; 34) en diamant au niveau d'une inclusion de diamant monocristallin (50).

14. Tube générateur de rayons X (10) selon l'une des revendications 4 à 13, **caractérisé en ce qu'**il comprend un asservissement (70) du faisceau électronique (14) de la cathode (12) en fonction d'une mesure (71) d'un flux de rayons X émis par le tube générateur (10).

15. Tube générateur de rayons X (10) selon la revendication 14, **caractérisé en ce que** la cathode (12) est une photocathode à nanotube de carbone.

## Patentansprüche

1. Röntgenstrahlengeneratorröhre (10), die eine Vakuumkammer (11) mit einer Katode (12) und einer Anode (13) umfasst, die in der Vakuumkammer (11) platziert sind, wobei die Katode (12) einen Elektronenstrahl (14) in Richtung der Anode (13) aussendet, wobei die Anode (13) ein Target (13) umfasst, das Röntgenstrahlung (16) aussendet, wenn der Elektronenstrahl (14) darauf auftrifft, wobei sich die Röntgenstrahlung (16) außerhalb der Vakuumkammer (11) unter Durchdringung der Wand der Kammer (11) durch ein Transmissionsfenster (17; 30; 31; 32; 33; 34) auf Diamantbasis ausbreitet, **dadurch gekennzeichnet, dass** ein Röntgenstrahlensensor (21; 121) auf Diamantbasis auf dem Transmissionsfenster (17) auf Diamantbasis integriert ist.

2. Röntgenstrahlengeneratorröhre (10) nach Anspruch 1, **dadurch gekennzeichnet, dass** das Target (13) fern von dem Transmissionsfenster (17; 30; 31; 32; 33; 34) ist.

3. Röntgenstrahlengeneratorröhre (10) nach Anspruch 1, **dadurch gekennzeichnet, dass** das Target (13) neben dem Transmissionsfenster (17; 30; 31; 32; 33; 34) liegt.

4. Röntgenstrahlengeneratorröhre (10) nach einem der vorherigen Ansprüche, **dadurch gekennzeichnet, dass** der Röntgenstrahlensensor (21) wenigstens eine Elektrode (19) umfasst, die aus leitenden Schichten gebildet ist.

5. Röntgenstrahlengeneratorröhre (10) nach einem der Ansprüche 1 bis 3, **dadurch gekennzeichnet, dass** der Röntgenstrahlensensor (21) wenigstens eine Elektrode (19) umfasst, die aus dotierten Diamantschichten gebildet ist.

6. Röntgenstrahlengeneratorröhre (10) nach einem der vorherigen Ansprüche, **dadurch gekennzeichnet, dass** der Röntgenstrahlensensor (21) einen Oberflächendetektor für Strom (24) umfasst.

7. Röntgenstrahlengeneratorröhre (10) nach einem der Ansprüche 1 bis 6, **dadurch gekennzeichnet, dass** mehrere Sensoren (21; 121) auf dem Transmissionsfenster (33) integriert sind.

8. Röntgenstrahlengeneratorröhre (10) nach einem der vorherigen Ansprüche, **dadurch gekennzeichnet, dass** mehrere Targets (15; 115) neben dem Transmissionsfenster (34) liegen.

9. Röntgenstrahlengeneratorröhre (10) nach einem der vorherigen Ansprüche, **dadurch gekennzeichnet, dass** der Röntgenstrahlensensor (21) einen leitenden Schutzring (22) umfasst, der den Sensor umgibt und mit einer elektrischen Spannungsquelle verbunden ist.

10. Röntgenstrahlengeneratorröhre (10) nach einem der Ansprüche 1 bis 9, **dadurch gekennzeichnet, dass** das Transmissionsfenster (17; 30; 31; 32; 33; 34) aus polykristallinem Diamant ist.

11. Röntgenstrahlengeneratorröhre (10) nach einem der Ansprüche 1 bis 9, **dadurch gekennzeichnet, dass** das Transmissionsfenster (17; 30; 31; 32; 33; 34) aus monokristallinem Diamant ist.

12. Röntgenstrahlengeneratorröhre (10) nach einem der Ansprüche 1 bis 9, **dadurch gekennzeichnet, dass** das Transmissionsfenster (17; 30; 31; 32; 33; 34) aus polykristallinem Diamant mit wenigstens einem Einschluss (50) von monokristallinem Diamant ist.

13. Röntgenstrahlengeneratorröhre (10) nach einem der vorherigen Ansprüche, **dadurch gekennzeichnet, dass** der Röntgenstrahlensensor (19) auf dem Transmissionsfenster (17; 30; 31; 32; 33; 34) aus Diamant an einem Einschluss (50) von monokristallinem Diamant integriert ist.

14. Röntgenstrahlengeneratorröhre (10) nach einem der Ansprüche 4 bis 13, **dadurch gekennzeichnet, dass** sie eine Steuerung (70) des Elektronenstrahls (14) der Katode (12) in Abhängigkeit von einem Messwert (71) eines von der Generatorröhre (10) ausgestrahlten Röntgenstrahlenflusses umfasst.

15. Röntgenstrahlengeneratorröhre (10) nach Anspruch 14, **dadurch gekennzeichnet, dass** die Katode (12) eine Kohlenstoffnanoröhren-Fotokatode ist.

## Claims

1. An x-ray generator tube (10) comprising a vacuum chamber (11) with a cathode (12) and an anode (13), said cathode and anode being placed in the vacuum chamber (11), the cathode (12) emitting an electron beam (14) in the direction of the anode (13), the anode (13) including a target (13) emitting x-rays (16) when it is struck by the electron beam (14), the x-rays (16) propagating out of the vacuum chamber (11) by passing through the wall of the chamber (11) via a diamond-based transmission window (17; 30; 31; 32; 33; 34), **characterized in that** a diamond-based x-ray sensor (21; 121) is integrated into the diamond-based transmission window (17).

2. The x-ray generator tube (10) as claimed in claim 1, **characterized in that** the target (13) is away from the transmission window (17; 30; 31; 32; 33; 34).

3. The x-ray generator tube (10) as claimed in claim 1, **characterized in that** the target (13) is juxtaposed with the transmission window (17; 30; 31; 32; 33; 34).

4. The x-ray generator tube (10) as claimed in one of the preceding claims, **characterized in that** the x-ray sensor (21) comprises at least one electrode (19) composed of conductive layers.

5. The x-ray generator tube (10) as claimed in one of claims 1 to 3, **characterized in that** the x-ray sensor (21) comprises at least one electrode (19) composed of doped layers of diamond.

6. The x-ray generator tube (10) as claimed in one of the preceding claims, **characterized in that** the x-ray sensor (21) includes a surface-mounted current detector (24).

7. The x-ray generator tube (10) as claimed in one of claims 1 to 6, **characterized in that** a plurality of sensors (21; 121) are integrated into the transmission window (33).

8. The x-ray generator tube (10) as claimed in one of the preceding claims, **characterized in that** a plurality of targets (15; 115) are juxtaposed with the transmission window (34).

9. The x-ray generator tube (10) as claimed in one of the preceding claims, **characterized in that** the x-ray sensor (21) includes a conductive guard ring (22) surrounding the sensor and connected to an electrical voltage source.

10. The x-ray generator tube (10) as claimed in one of claims 1 to 9, **characterized in that** the transmission window (17; 30; 31; 32; 33; 34) is made of polycrystalline diamond.

11. The x-ray generator tube (10) as claimed in one of claims 1 to 9, **characterized in that** the transmission window (17; 30; 31; 32; 33; 34) is made of single-crystal diamond.

12. The x-ray generator tube (10) as claimed in one of claims 1 to 9, **characterized in that** the transmission window (17; 30; 31; 32; 33; 34) is made of polycrystalline diamond with at least one single-crystal diamond inclusion (50).

13. The x-ray generator tube (10) as claimed in one of the preceding claims, **characterized in that** the x-ray sensor (19) is integrated into the transmission window (17; 30; 31; 32; 33; 34) made of diamond in a single-crystal diamond inclusion (50).

14. The x-ray generator tube (10) as claimed in one of claims 4 to 13, **characterized in that** it comprises a feedback control loop (70) for controlling the electron beam (14) of the cathode (12), this control loop using a measurement (71) of a flux of x-rays emitted by the generator tube (10) as input.

15. The x-ray generator tube (10) as claimed in claim 14, **characterized in that** the cathode (12) is a carbon nanotube photocathode.
